# EUROPÄISCHE PATENTSCHRIFT

(11) **EP 3 688 780 B1**
(45) Veröffentlichungstag und Bekanntmachung des Hinweises auf die Patenterteilung: **28.12.2022**
(21) Anmeldenummer: 18780053.7
(22) Anmeldetag: 25.09.2018
(51) Int. Cl.: H01H 9/54

(54) **NIEDERSPANNUNGS-SCHUTZSCHALTGERÄT**
LOW-VOLTAGE CIRCUIT BREAKER DEVICE
DISJONCTEUR À BASSE TENSION

(30) Priorität: 26.09.2017 DE 102017122218
(43) Veröffentlichungstag der Anmeldung: 05.08.2020
(73) Patentinhaber: Eaton Intelligent Power Limited, Dublin 4 (IE)
(72) Erfinder: ASKAN, Kenan, 1090 Wien (AT)
(74) Vertreter: Eaton IP Group EMEA
(86) Internationale Anmeldenummer: PCT/EP2018/075853
(87) Internationale Veröffentlichungsnummer: WO 2019/063500

(56) Entgegenhaltungen:
- WO-A1-2015/028634
- WO-A1-2018/072983
- DE-A1- 4 142 569
- JP-A- 2006 092 859
- US-A1- 2016 322 809

## Beschreibung

Die Erfindung betrifft ein Niederspannungs-Schutzschaltgerät gemäß dem Oberbegriff des Patentanspruches 1.

Es ist ein entsprechendes Schutzschaltgerät aus der WO 2015/028634 A1 der Anmelderin bekannt. Der Halbleiterschalter eines derartigen Schutzschaltgeräts wird lediglich zum regulären Ein- bzw. Ausschalten des betreffenden Schutzschaltgeräts sowie zur Notabschaltung im Falle eines Kurzschlusses bzw. eines Überstromes verwendet. Sowohl die reguläre Inbetriebnahme eines Schutzschaltgeräts wie auch Notabschaltungen kommen höchst selten vor. Zwar fließen zuweilen höhere Ströme als der Nennstrom über ein Schutzschaltgerät, aber derartige Überströme führen, sofern diese klein genug bzw. nur kurzzeitig andauern nicht zu einem Abschalten des betreffenden Schutzschalters.

Derartige Überströme fließen jedoch über das Bypassrelais eines entsprechenden hybriden Schutzschalters. Ein derartiges Bypassrelais muss sehr viel schnell öffnen als herkömmliche Relais, weshalb spezielle Kontakte und eine spezielle Konstruktion erforderlich sind. Dies führt zu einem gewissen, nicht mehr vernachlässigbaren Widerstand des Bypassrelais. Dieser Widerstand ist bei einem Bypassrelais mit mehreren seriellen Kontaktstellen noch deutlich erhöht. Wenngleich dieser Widerstand im Normalbetrieb kein Problem darstellt, führt dieser jedoch im Überlastfall ohne Auslösen des Schutzschalters zu einer problematischen thermischen Belastung des Bypassrelais, sowie der benachbart angeordneten Baugruppen innerhalb des Schutzschalters. Dies kann die Lebensdauer des Schutzschalters verringern.

Aus der WO 2018/072983 A1 ist ein Schutzschaltgerät mit einer parallel zu einer Bypassschalter angeordneten ersten Halbleiterschaltungsanordnung und einer seriell zu dem Bypassschalter angeordneten zweiten Halbleiterschaltungsanordnung bekannt.

Aus der US 2016/0322809 A1 ist ein Schutzschaltgerät gemäß dem Oberbegriff des Anspruchs 1 mit einer parallel zu einer Bypassschalter angeordneten ersten Halbleiterschaltungsanordnung und einer seriell zu dem Bypassschalter angeordneten zweiten Halbleiterschaltungsanordnung bekannt.

Aus der WO 2015/028634 A1 ist ein Schutzschaltgerät mit mindestens einer Außenleiterstrecke von einem Außenleiterversorgungsanschluss des Schutzschaltgeräts zu einem Außenleiterlastanschluss des Schutzschaltgeräts, und einer Neutralleiterstrecke von einem Neutralleiteranschluss des Schutzschaltgeräts zu einem Neutralleiterlastanschluss des Schutzschaltgeräts bekannt.

Aus der DE 41 42 569 A1 ist eine Schaltungsanordnung bekannt, bei welcher ein mechanischer Schalter parallel zu einem Halbleiter Schalter geschaltet wird.

Aus der JP 2006 092859 A ist eine Anordnung bekannt, wobei zur Modulation eines Laststromes eine erste Halbleiterschaltungsanordnung und eine zweite Halbleiterschaltungsanordnung nachfolgend abwechselnd durchgeschaltet werden.

Aufgabe der Erfindung ist es daher ein Schutzschaltgerät der eingangs genannten Art anzugeben, mit welchem die genannten Nachteile vermieden werden können, welches eine geringe Baugröße aufweist, welches hohe Nenn- bzw. Dauerströme ermöglicht, welches ein hohes Abschaltvermögen aufweist und über eine lange Zeit eine hohe Zuverlässigkeit aufweist

Erfindungsgemäß wird dies durch die Merkmale des Patentanspruches 1 erreicht.

Dadurch kann die Eigenerwärmung des Schutzschaltgeräts selbst bei hohen Dauerströmen bzw. Überströmen, welche nicht zu einer Abschaltung führen, gering gehalten werden. Durch die geringe Erwärmung kann auch die Baugröße des Schutzschaltgeräts gering gehalten werden. Aufgrund der geringen Eigenerwärmung des Schutzschaltgeräts können die Innentemperaturen gering gehalten werden, wodurch die Lebensdauer der Halbleiter in dem Schutzschaltgerät und die Zuverlässigkeit vergrößert wird.

Die Unteransprüche betreffen weitere vorteilhafte Ausgestaltungen der Erfindung.

Ausdrücklich wird hiermit auf den Wortlaut der Patentansprüche Bezug genommen, wodurch die Ansprüche an dieser Stelle durch Bezugnahme in die Beschreibung eingefügt sind und als wörtlich wiedergegeben gelten.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 eine erste Ausführungsform einer Schaltstrecke eines gegenständlichen Schutzschaltgeräts; und
Fig. 2 eine Ausführungsform eines Schutzschaltgeräts mit einer zweiten Ausführungsform einer Schaltstrecke.

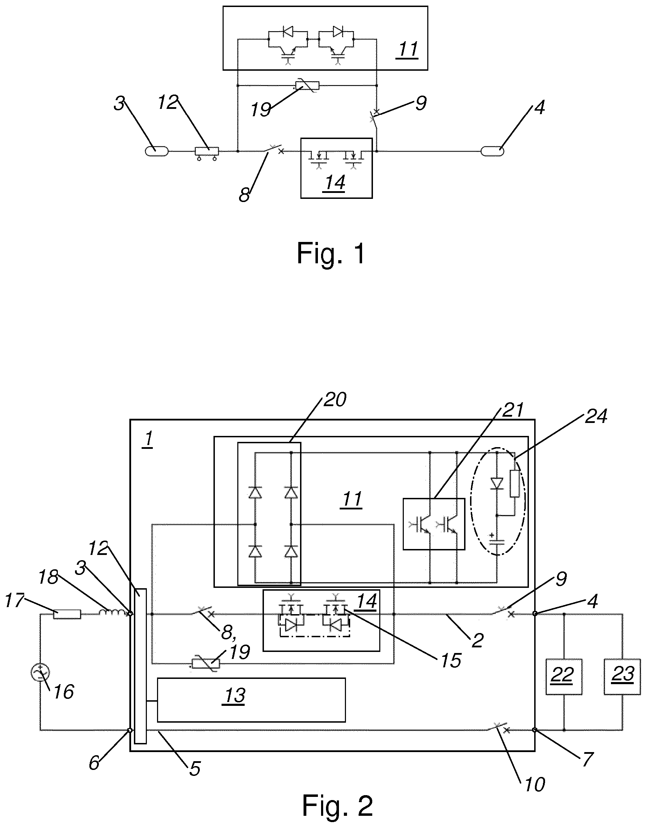

Die Fig. 2 zeigt ein Blockschaltbild einer bevorzugten Ausführungsform eines Niederspannungs-Schutzschaltgeräts 1 mit mindestens einer Außenleiterstrecke 2 von einem Außenleiterversorgungsanschluss 3 des Niederspannungs-Schutzschaltgeräts 1 zu einem Außenleiterlastanschluss 4 des Niederspannungs-Schutzschaltgeräts 1, und einer Neutralleiterstrecke 5 von einem Neutralleiteranschluss 6 des Niederspannungs-Schutzschaltgeräts 1 zu einem Neutralleiterlastanschluss 7 des Niederspannungs-Schutzschaltgeräts 1, wobei in der Außenleiterstrecke 2 ein mechanischer Bypassschalter 8 angeordnet ist, wobei eine erste Halbleiterschaltungsanordnung 11 des Niederspannungs-Schutzschaltgeräts 1 parallel zum Bypassschalter 8 geschaltet ist, wobei in der Außenleiterstrecke 2 eine Strommessanordnung 12 angeordnet ist, welche mit einer elektronischen Steuereinheit 13 des Schutzschaltgeräts 1 verbunden ist, wobei die elektronische Steuereinheit 13 dazu ausgebildet ist, den Bypassschalter 8 und die erste Halbleiterschaltungsanordnung 11 anzusteuern, wobei in der Außenleiterstrecke 2 eine zweite Halbleiterschaltungsanordnung 14 schaltungstechnisch seriell zum Bypassschalter 8 und parallel zur ersten Halbleiterschaltungsanordnung 11 angeordnet ist, und wobei die elektronische Steuereinheit 13 dazu ausgebildet ist:
- beim Auftreten eines Stromes über die Außenleiterstrecke 2, welcher größer dem Nennstrom aber kleiner einem Auslöseüberstrom, insbesondere einem Kurzschluss, ist, zuerst die erste Halbleiterschaltungsanordnung 11 einzuschalten, dann die zweite Halbleiterschaltungsanordnung 14 zu sperren, und nachfolgend vorgebbar abwechselnd die erste Halbleiterschaltungsanordnung 11 und die zweite Halbleiterschaltungsanordnung 14 durchzuschalten, und derart den Stromfluss abwechselnd über die erste Halbleiterschaltungsanordnung 11 und die zweite Halbleiterschaltungsanordnung 14 zu führen,
und/oder
- beim Auftreten eines Auslöseüberstroms, insbesondere eines Kurzschlusses, über die Außenleiterstrecke 2, zuerst die erste Halbleiterschaltungsanordnung 11 einzuschalten, nachfolgend die zweite Halbleiterschaltungsanordnung 14 zu sperren, nachfolgenden den Bypassschalter 8 zu öffnen, und nachfolgend die erste Halbleiterschaltungsanordnung 11 in den nicht-leitenden Zustand zu steuern.

Dadurch kann die Eigenerwärmung des Schutzschaltgeräts 1 selbst bei hohen Dauerströmen bzw. Überströmen, welche nicht zu einer Abschaltung führen, gering gehalten werden. Durch die geringe Erwärmung kann auch die Baugröße des Schutzschaltgeräts 1 gering gehalten werden. Aufgrund der geringen Eigenerwärmung des Schutzschaltgeräts 1 können die Innentemperaturen gering gehalten werden, wodurch die Lebensdauer der Halbleiter in dem Schutzschaltgerät 1 und die Zuverlässigkeit vergrößert wird.

Bei dem gegenständlichen Niederspannungs-Schutzschaltgerät 1 wie auch dem Schutzschaltgerät gemäß der WO 2015/028634 A1 handelt es sich um Niederspannungs-Schutzschaltgeräte. Als Niederspannung wird wie an sich üblich der Bereich bis 1000V Wechselspannung bzw. 1500V Gleichspannung bezeichnet.

Das Schutzschaltgerät 1 gemäß Fig. 2 weist eine Außenleiterstrecke 2 sowie eine Neutralleiterstrecke 5 auf. Die Außenleiterstrecke 2 verläuft durch das Schutzschaltgerät 1 von einem Außenleiterversorgungsanschluss 3 zu einem Außenleiterlastanschluss 4. Die Neutralleiterstrecke 5 verläuft durch das Schutzschaltgerät 1 von einem Neutralleiteranschluss 6 zu einem Neutralleiterlastanschluss 7. Die betreffenden Anschlüsse 3, 4, 6, 7 sind jeweils bevorzugt als Schraubanschlussklemmen bzw. Steckanschlussklemmen ausgebildet, und in dem Schutzschaltgerät 1 von außen zugänglich angeordnet.

Das Schutzschaltgerät 1 weist bevorzugt ein Isolierstoffgehäuse auf.

In der Außenleiterstrecke 2 ist ein mechanischer Bypassschalter 8, bevorzugt mit einfacher Kontaktunterbrechung, angeordnet. Bei dem Schalter gemäß Fig. 2 ist in der Außenleiterstrecke 2 weiters ein erster mechanischer Trennschalter 9 seriell zum Bypassschalter 8 angeordnet. In der Neutralleiterstrecke 5 ist ein zweiter mechanischer Trennschalter 10 angeordnet. Parallel zum Bypassschalter 8 ist eine Halbleiterschaltungsanordnung 11 geschaltet.

Weiters ist parallel zum Bypassschalter 8 ein Überspannungsableiter 19 geschaltet.

Das Schutzschaltgerät 1 weist weiters eine Strommessanordnung 12 auf, welche zumindest in der Außenleiterstrecke 2 angeordnet ist, und welche bevorzugt umfassend einem Shunt-Widerstand ausgebildet ist.

Die Strommessanordnung 12 ist mit einer elektronischen Steuereinheit 13 des Schutzschaltgeräts 1 verbunden, welche bevorzugt umfassend einen Mikrocontroller bzw. Mikroprozessor ausgebildet ist. Die elektronische Steuereinheit 13 ist dazu ausgebildet, den Bypassschalter 8 und die erste Halbleiterschaltungsanordnung 11, sowie den ersten mechanischen Trennschalter 9 und den zweiten mechanischen Trennschalter 10, anzusteuern, daher diese vorgebbar zu betätigen bzw. zu schalten. Hiezu ist die elektronische Steuereinheit 13 mit der ersten Halbleiterschaltungsanordnung 11, sowie weiters mit, insbesondere elektromagnetischen, Betätigungselementen der mechanischen Schalter, daher des Bypassschalters 8, des ersten mechanischen Trennschalters 9 und des zweiten mechanischen Trennschalters 10 bevorzugt schaltungstechnisch verbunden. Die entsprechenden Verbindungen ausgehend von der elektronischen Steuereinheit 13 sind nicht Fig. 2 dargestellt. Die elektronischen Steuereinheit 13 ist weiters in Fig. 1 gar nicht dargestellt.

Die erste Halbleiterschaltungsanordnung 11 kann als jede Art bzw. Ausführungsform bzw. Topologie eines bidirektionalen 4Q (vier Quadranten) Schalters ausgebildet sein.

Fig. 2 zeigt diesbezüglich lediglich eine mögliche Ausführungsform der ersten Halbleiterschaltungsanordnung 11. Diese weist eine Gleichrichterschaltung 20 auf, welche bevorzugt als Vollbrücke ausgebildet ist, sowie, bei der gegenständlichen Ausführungsform zwei Leistungshalbleiter 21, welche gegenständlich als IGBT ausgebildet sind, als eigentliche Schalt- bzw. Regelelemente auf. Dabei kann auch ein größerer Leistungshalbleiter 21 vorgesehen sein.

In Fig. 2 ist neben dem eigentlichen Schutzschaltgerät 1 weites die elektrische Umgebung angedeutet. Dabei ist das Versorgungsnetz durch die AC/DC-Netzspannungsquelle 16, den Netzinnenwiderstand 17 und die Netzinduktivität 18 dargestellt. Weiters ist eine elektrische Last 23, sowie ein elektrischer Fehler 22 in Form eines Kurzschlusses dargestellt.

Im Gegensatz zu dem Niederspannungs-Schutzschaltgerät 1 gemäß Fig. 2 ist bei dem Niederspannungs-Schutzschaltgeräten 1 gemäß Fig. 1 lediglich die Außenleiterstrecke 2 vorgesehen, dass der erste mechanische Trennschalter 9 schaltungstechnisch seriell zur ersten Halbleiterschaltungsanordnung 11 im Parallelzweig der ersten Halbleiterschaltungsanordnung 11, daher gleichzeitig parallel zum Bypassschalter 8, angeordnet ist. Bei dieser Anordnung kann der erste mechanische Trennschalter 9 mechanisch deutlich einfacher ausgebildet werden, als bei dem Niederspannungs-Schutzschaltgerät 1 gemäß Fig. 2, da dieser nur im Zuge eines Schaltvorganges stromdurchflossen wird. Gleichzeitig ist der Bypassschalter 8 zur Gewährleistung eines galvanischen Trennung auszubilden, insbesondere mit entsprechend vergrößertem Kontaktabstand im geöffnetem Zustand.

Weiters ist bei der Ausführungsform gemäß Fig. 1 die erste Halbleiterschaltungsanordnung 11 unterschiedlich zu Fig. 2 ausgebildet. Die gegenständliche Erfindung ist daher unabhängig von der konkreten Implementierung der ersten Halbleiterschaltungsanordnung 11.

Bevorzugt ist vorgesehen, dass die elektronische Steuereinheit 13 weiterhin dazu ausgebildet ist, den ersten mechanischen Trennschalter 9 zu betätigen, sofern im Zuge eines Abschaltvorgangs eine galvanische Trennung gewünscht oder erforderlich ist. Im Zuge des gegenständlich beschriebenen Betriebes ist der Trennschalter 9 geschlossen.

Ebenso ist bevorzugt vorgesehen, dass in der Neutralleiterstrecke 5 ein zweiter mechanischer Trennschalter 10 angeordnet ist, und dass die elektronische Steuereinheit 13 vorzugsweise dazu ausgebildet ist, den zweiten mechanischen Trennschalter 10 zu betätigen. Weiters ist parallel zum Bypassschalter 8 sowie der ersten Halbleiterschaltungsanordnung 11 sowie seriell zum ersten Trennschalter 9 bevorzugt ein Überspannungsableiter 19, insbesondere ein Varistor, vorzugsweise ein MOV, schaltungstechnisch angeordnet. MOV steht dabei für Metall Oxide Varistor.

Es ist vorgesehen, dass in der Außenleiterstrecke 2 eine zweite Halbleiterschaltungsanordnung 14 schaltungstechnisch seriell zum Bypassschalter 8 und parallel zur ersten Halbleiterschaltungsanordnung 11 angeordnet ist.

Durch die zweite Halbleiterschaltungsanordnung 14 kann sowohl die Belastung des Bypassschalters 8 als auch der ersten Halbleiterschaltungsanordnung 11 verringert werden. Dadurch kann erreicht werden, dass der Strom bereits bei deutlich geringerer Stromstärke als bei herkömmlichen Schutzschaltgeräten auf die erste Halbleiterschaltungsanordnung 11 kommutiert, wodurch die Belastung der ersten Halbleiterschaltungsanordnung 11 verringert und deren Lebensdauer vergrößert werden kann. Dadurch kann das Auftreten eines Lichtbogens an dem Bypassschalter 8 im Wesentlichen gänzlich vermieden werden, wodurch die Belastung der entsprechenden Schaltkontakte verringert und deren Lebensdauer vergrößert werden kann.

Durch die gegenständlichen Maßnahmen können weitere Vorteile erzielt werden. Da beim Abschalten kein Lichtbogen auftritt, muss auch kein Lichtbogen gelöscht werden. Es entstehen keine heißen ionisierten Gase, welche erst gekühlt werden müsste, um ein erneutes Zünden eines Lichtbogens zu verhindern. Dadurch kann sowohl die Belastbarkeit der ersten Halbleiterschaltungsanordnung 11 reduziert werden, als auch der gesamte Abschaltvorgang weiter beschleunigt werden, da ein erneutes Zünden eines Lichtbogens gegenständlich nicht mehr zu befürchten ist. Alternativ kann auch die Belastbarkeit der ersten Halbleiterschaltungsanordnung 11 unverändert bleiben und die Öffnungsgeschwindigkeit des Bypassschalters 8 reduziert werden, wodurch dieser einfacher ausgebildet werden kann.

Durch das schnelle Abschalten eines Kurzschluss- bzw- Überlaststromes wird weniger Energie als sonst in Form von Streuinduktivitäten bzw. in der Netzinduktanz gespeichert, wodurch der Überspannungsableiter 19 sowie der Snubber 24 geschont wird. Dieser kann aufgrund weiterer Effekte auch kleiner dimensioniert werden.

Da kein Schaltlichtbogen auftritt, ist der Spannungsabfall an der ersten Halbleiterschaltungsanordnung 11 nicht durch die Lichtbogenspannung limitiert. Die zweite Halbleiterschaltungsanordnung 14 ermöglicht zudem einen, vom Stand der Technik gemäß der WO 2015/028634 A1 der Anmelderin gänzlich abweichenden und vorteilhaften Betrieb des Niederspannungs-Schutzschaltgeräts 1.

Es ist weiters vorgesehen, dass die elektronische Steuereinheit 13 dazu ausgebildet ist beim Auftreten eines Stromes über die Außenleiterstrecke 2, welcher größer dem Nennstrom aber kleiner einem Auslöseüberstrom, insbesondere einem Kurzschluss, ist, zuerst die erste Halbleiterschaltungsanordnung 11 einzuschalten, dann bzw. nachfolgend die zweite Halbleiterschaltungsanordnung 14 zu sperren, und nachfolgend vorgebbar abwechselnd die erste Halbleiterschaltungsanordnung 11 und die zweite Halbleiterschaltungsanordnung 14 durchzuschalten, und derart den Stromfluss abwechselnd über die erste Halbleiterschaltungsanordnung 11 und die zweite Halbleiterschaltungsanordnung 14 zu führen. Der Bypassschalter 8 ist dabei stets geschlossen. Ein solcher Strom, welcher etwa beim Start einer Maschine oder einen zu starken Verbrauchers für kurze Zeit fließen kann, jedoch noch keine Gefahr darstellt, kann zu erheblicher Verlustleistung im Schaltgerät 1 führen. Durch die gegenständliche Betriebsart wird erreicht, dass die thermische Belastung beider Halbleiterschaltungsanordnung 11, 14 gering gehalten werden kann, indem der Strom vorgebbar getaktet zwischen diesen beiden Halbleiterschaltungsanordnungen 11, 14 hin und her geschaltet wird. Dadurch kommt es zu einer geringen Verlustleistung an jeder der Halbleiterschaltungsanordnungen 11, 14, wobei die jeweils stromlose Halbleiterschaltungsanordnung 11, 14 zudem Gelegenheit zum Abkühlen hat.

Es ist weiters zudem bzw. alternativ hierzu vorgesehen, dass die elektronische Steuereinheit 13 dazu ausgebildet ist beim Auftreten eines Auslöseüberstroms, insbesondere eines Kurzschlusses, über die Außenleiterstrecke (2), zuerst die erste Halbleiterschaltungsanordnung 11 einzuschalten, nachfolgend die zweite Halbleiterschaltungsanordnung 14 zu sperren, nachfolgenden den Bypassschalter 8 zu öffnen, und nachfolgend die erste Halbleiterschaltungsanordnung 11 in den nicht-leitenden Zustand zu steuern.

Dabei ist bevorzugt vorgesehen, dass die elektronische Steuereinheit 13 dazu ausgebildet ist, bei Detektion eines Kurzschlussstromes durch die Strommessanordnung 12 erst die erste Halbleiterschaltungsanordnung 11 einzuschalten, im Wesentlichen unmittelbar nachfolgend die zweite Halbleiterschaltungsanordnung 14 zu sperren, im Wesentlichen unmittelbar nachfolgenden den Bypassschalter 8 zu öffnen, nachfolgend, insbesondere sobald der Bypassschalter 8 genug geöffnet hat, die erste Halbleiterschaltungsanordnung 11 in den nicht-leitenden Zustand zu steuern, und nachfolgend, insbesondere sobald der Strom nahezu Null ist, den ersten mechanischen Trennschalter 9 zu öffnen. Nachfolgend wird bevorzugt der zweite mechanische Trennschalter 10 geöffnet. Durch den Betrieb in dieser Reihenfolge kann erreicht werden, dass der Strom bereits auf die erste Halbleiterschaltungsanordnung 11 kommutiert, wenn dieser noch sehr klein ist, wobei kein entsprechender Abfall, verbunden mit einem Lichtbogen an dem Bypassschalter 8 erforderlich ist.

Bevorzugt ist vorgesehen, dass die zweite Halbleiterschaltungsanordnung 14 bidirektional ausgebildet ist. Besonders bevorzugt ist die zweite Halbleiterschaltungsanordnung 14 als vier Quadranten-Schaltung ausgebildet, für beide Stromrichtungen und beide Spannungspolaritäten.

Weiters ist bevorzugt vorgesehen, dass die zweite Halbleiterschaltungsanordnung 14 umfassend Niederspanungs-Halbleiter 15 ausgebildet ist. Die zweite Halbleiterschaltungsanordnung 14 befindet sich ständig im Stromfluss, weshalb der Innenwiderstand derselben relevant ist, um eine zu große Verlustleistung an dieser Stelle zu vermeiden. Nach dem Abschalten der zweiten Halbleiterschaltungsanordnung 14 kommutiert der Strom auf die erste Halbleiterschaltungsanordnung 11. Der Spannungsabfall über die zweite Halbleiterschaltungsanordnung 14 beträgt dabei lediglich einige Volt. Beim Ausschalten der ersten Halbleiterschaltungsanordnung 11 ist darauf zu achten, dass die Schaltkontakte des Bypassschalters 8, bereits genügend Kontaktabstand erreicht haben, dass an der zweiten Halbleiterschaltungsanordnung 14 keine Spannung mehr anliegt.

Bevorzugt sind die Niederspanungs-Halbleiter 15 als 20-30V MOSFET gewählt, aufgrund deren sehr geringen Innenwiderstandes, sowie um die Verlustleitung im regulären Betrieb gering zu halten. Der Spannungsabfall an den Niederspanungs-Halbleiter 15 dient lediglich dazu den Strom zum Kommutieren auf die erste Halbleiterschaltungsanordnung 11 zu bringen.

Die erste Halbleiterschaltungsanordnung 11 ist entsprechend belastbar ausgebildet, um die hohen Ströme und Spannungsspitzen bei einem Kurzschluss zu schalten. Die erste Halbleiterschaltungsanordnung 11 kann ausgeschaltet werden, sobald die Kontakte des Bypassschalters 8 genügend Kontaktabstand aufweisen.

Die Niederspanungs-Halbleiter 15 weisen jeweils bevorzugt eine Antiparallel-Diode auf, welche auch als Monolithic Body Diode bezeichnet wird.

## Patentansprüche

1. Niederspannungs-Schutzschaltgerät (1) mit mindestens einer Außenleiterstrecke (2) von einem Außenleiterversorgungsanschluss (3) des Niederspannungs-Schutzschaltgeräts (1) zu einem Außenleiterlastanschluss (4) des Niederspannungs-Schutzschaltgeräts (1),
wobei in der Außenleiterstrecke (2) ein mechanischer Bypassschalter (8) angeordnet ist, wobei eine erste Halbleiterschaltungsanordnung (11) des Niederspannungs-Schutzschaltgeräts (1) parallel zum Bypassschalter (8) geschaltet ist, wobei in der Außenleiterstrecke (2) eine Strommessanordnung (12) angeordnet ist, welche mit einer elektronischen Steuereinheit (13) des Schutzschaltgeräts (1) verbunden ist, wobei die elektronische Steuereinheit (13) dazu ausgebildet ist, den Bypassschalter (8) und die erste Halbleiterschaltungsanordnung (11) anzusteuern, wobei in der Außenleiterstrecke (2) eine zweite Halbleiterschaltungsanordnung (14) schaltungstechnisch seriell zum Bypassschalter (8) und parallel zur ersten Halbleiterschaltungsanordnung (11) angeordnet ist, **dadurch gekennzeichnet, dass**
das Niederspannungs-Schutzschaltgerät ferner mit einer Neutralleiterstrecke (5) von einem Neutralleiteranschluss (6) des Niederspannungs-Schutzschaltgeräts (1) zu einem Neutralleiterlastanschluss (7) des Niederspannungs-Schutzschaltgeräts (1) versehen ist, und
die elektronische Steuereinheit (13) dazu ausgebildet ist beim Auftreten eines Stromes über die Außenleiterstrecke (2), welcher größer dem Nennstrom aber kleiner einem Auslöseüberstrom, insbesondere einem Kurzschluss, ist, zuerst die erste Halbleiterschaltungsanordnung (11) zu schließen, dann die zweite Halbleiterschaltungsanordnung (14) zu sperren, und nachfolgend vorgebbar abwechselnd die erste Halbleiterschaltungsanordnung (11) und die zweite Halbleiterschaltungsanordnung (14) durchzuschalten, und derart den Stromfluss abwechselnd über die erste Halbleiterschaltungsanordnung (11) und die zweite Halbleiterschaltungsanordnung (14) zu führen.

2. Niederspannungs-Schutzschaltgerät (1) nach Anspruch 1, **dadurch gekennzeichnet, dass** das Niederspannungs-Schutzschaltgerät (1) einen ersten mechanischen Trennschalter (9) aufweist, welcher der Außenleiterstrecke (2) zugeordnet ist, und dass das Niederspannungs-Schutzschaltgerät (1) einen zweiten mechanischen Trennschalter (10) aufweist, welcher in der Neutralleiterstrecke (5) angeordnet ist.

3. Niederspannungs-Schutzschaltgerät (1) nach Anspruch 2, **dadurch gekennzeichnet, dass** die elektronische Steuereinheit (13) dazu ausgebildet ist nach einer Abschaltung des Niederspannungs-Schutzschaltgeräts (1) den ersten mechanischen Trennschalter (9) und zweiten mechanischen Trennschalter (10) zu öffnen.

4. Niederspannungs-Schutzschaltgerät (1) nach einem der Ansprüche 1 bis 3, **dadurch gekennzeichnet, dass** die zweite Halbleiterschaltungsanordnung (14) bidirektional, insbesondere als bidirektionaler 4-Quadrantennschalter, ausgebildet ist.

5. Niederspannungs-Schutzschaltgerät (1) nach einem der Ansprüche 1 bis 4, **dadurch gekennzeichnet, dass** die zweite Halbleiterschaltungsanordnung (14) umfassend Niederspanungs-Halbleiter (15) ausgebildet ist.

6. Niederspannungs-Schutzschaltgerät (1) nach einem der Ansprüche 1 bis 5, **dadurch gekennzeichnet, dass** die elektronische Steuereinheit (13) dazu ausgebildet ist beim Auftreten eines Auslöseüberstroms, insbesondere eines Kurzschlusses, über die Außenleiterstrecke (2), zuerst die erste Halbleiterschaltungsanordnung (11) zu schließen, nachfolgend die zweite Halbleiterschaltungsanordnung (14) zu sperren, nachfolgenden den Bypassschalter (8) zu öffnen, und nachfolgend die erste Halbleiterschaltungsanordnung (11) in den nicht-leitenden Zustand zu steuern.

## Claims

1. Low-voltage circuit-breaker device (1) having at least one outer conductor path (2) from an outer conductor supply connection (3) of the low-voltage circuit-breaker device (1) to an outer conductor load connection (4) of the low-voltage circuit-breaker device (1), wherein a mechanical bypass switch (8) is arranged in the outer conductor path (2), wherein a first semiconductor circuit arrangement (11) of the low-voltage circuit-breaker device (1) is connected in parallel with the bypass switch (8), wherein a current measurement arrangement (12) is arranged in the outer conductor path (2), which is connected to an electronic control unit (13) of the circuit-breaker device (1), wherein the electronic control unit (13) is configured to control the bypass switch (8) and the first semiconductor circuit arrangement (11), wherein a second semiconductor circuit arrangement (14) is arranged in series with the bypass switch (8) and in parallel with the first semiconductor circuit arrangement (11) in the outer conductor path (2), **characterized in that** the low-voltage circuit-breaker device is further provided with a neutral conductor path (5) from a neutral conductor connection (6) of the low-voltage circuit-breaker device (1) to a neutral conductor load connection (7) of the low-voltage circuit-breaker device (1), and
the electronic control unit (13) is configured, in the event of a current arising via the outer conductor path (2) that is higher than the rated current but lower than a tripping overcurrent, in particular a short circuit, to first close the first semiconductor circuit arrangement (11), then to block the second semiconductor circuit arrangement (14), and subsequently to alternately connect the first semiconductor circuit arrangement (11) and the second semiconductor circuit arrangement (14) in a prespecifiable manner, and in this way to guide the current flow alternately via the first semiconductor circuit arrangement (11) and the second semiconductor circuit arrangement (14).

2. Low-voltage circuit-breaker device (1) according to Claim 1, **characterized in that** the low-voltage circuit-breaker device (1) comprises a first mechanical disconnecting switch (9), which is associated with the outer conductor path (2), **and in that** the low-voltage circuit-breaker device (1) comprises a second mechanical disconnecting switch (10), which is arranged in the neutral conductor path (5).

3. Low-voltage circuit-breaker device (1) according to Claim 2, **characterized in that** the electronic control unit (13) is configured to open the first mechanical disconnecting switch (9) and the second mechanical disconnecting switch (10) following a tripping of the low-voltage circuit-breaker device (1).

4. Low-voltage circuit-breaker device (1) according to any one of Claims 1 to 3, **characterized in that** the second semiconductor circuit arrangement (14) is configured to be bidirectional, in particular as a bidirectional 4-quadrant switch.

5. Low-voltage circuit-breaker device (1) according to any one of Claims 1 to 4, **characterized in that** the second semiconductor circuit arrangement (14) is configured to comprise low-voltage semiconductors (15).

6. Low-voltage circuit-breaker device (1) according to any one of Claims 1 to 5, **characterized in that** the electronic control unit (13) is configured, in the event of a tripping overcurrent, in particular a short circuit, arising via the outer conductor path (2), to first close the first semiconductor circuit arrangement (11), subsequently to block the second semiconductor circuit arrangement (14), subsequently to open the bypass switch (8), and subsequently to put the first semiconductor circuit arrangement (11) into the non-conductive state.

## Revendications

1. Disjoncteur à basse tension (1) comportant au moins une section de conducteur externe (2) d'un raccordement d'alimentation de conducteur externe (3) du disjoncteur à basse tension (1) à un raccordement de conducteur externe (4) du disjoncteur à basse tension (1), dans lequel dans la section de conducteur externe (2) un commutateur de dérivation mécanique (8) est disposé, dans lequel un premier ensemble de circuit à semi-conducteur (11) du disjoncteur à basse tension (1) est monté en parallèle avec le commutateur de dérivation (8), dans lequel dans la section de conducteur externe (2) un dispositif de mesure de courant (12) est disposé, qui est relié à une unité de commande électronique (13) du disjoncteur (1), dans lequel l'unité de commande électronique (13) est conçue pour commander le commutateur de dérivation (8) et le premier ensemble de circuit à semi-conducteur (11), dans lequel dans la section de conducteur externe (2) un deuxième ensemble de circuit à semi-conducteur (14) est disposé par une technique de circuits en série avec le commutateur de dérivation (8) et en parallèle avec le premier ensemble de circuit à semi-conducteur (11), **caractérisé en ce que** le disjoncteur à basse tension est en outre doté d'une section de conducteur neutre (5) d'un raccordement de conducteur neutre (6) du disjoncteur à basse tension (1) à un raccordement de charge de conducteur neutre (7) du disjoncteur à basse tension (1) et
l'unité de commande électronique (13) est conçue pour, lors de l'apparition d'un courant à travers la section de conducteur externe (2), qui est supérieur au courant nominal mais inférieure à une surintensité de déclenchement, en particulier un court-circuit, fermer d'abord le premier ensemble de circuit à semi-conducteur (11), puis désactiver le deuxième ensemble de circuit à semi-conducteur (14) et par la suite commuter alternativement de manière prédéterminable le premier ensemble de circuit à semi-conducteur (11) et le deuxième ensemble de circuit à semi-conducteur (14) et ainsi guider le flux de courant alternativement à travers le premier ensemble de circuit à semi-conducteur (11) et le deuxième ensemble de circuit à semi-conducteur (14).

2. Disjoncteur à basse tension (1) selon la revendication 1,
**caractérisé en ce que** le disjoncteur à basse tension (1) présente un premier coupe-circuit mécanique (9), qui est attribué à la section de conducteur externe (2) **et que** le disjoncteur à basse tension (1) présente un deuxième coupe-circuit mécanique (10), qui est attribué à la section de conducteur neutre (5).

3. Disjoncteur à basse tension (1) selon la revendication 2,
**caractérisé en ce que** l'unité de commande électronique (13) est conçue, après une coupure du disjoncteur à basse tension (1), pour ouvrir le premier coupe-circuit mécanique (9) et le deuxième coupe-circuit mécanique (10).

4. Disjoncteur à basse tension (1) selon l'une quelconque des revendications 1 à 3, **caractérisé en ce que** le deuxième ensemble de circuit à semi-conducteur (14) est conçu comme un coupe-circuit bidirectionnel, en particulier bidirectionnel à 4 quadrants.

5. Disjoncteur à basse tension (1) selon l'une quelconque des revendications 1 à 4, **caractérisé en ce que** le deuxième ensemble de circuit à semi-conducteur (14) est conçu comprenant un semi-conducteur à basse tension (15).

6. Disjoncteur à basse tension (1) selon l'une quelconque des revendications 1 à 5, **caractérisé en ce que** l'unité de commande électronique (13) est conçue pour, lors de l'apparition d'une surintensité de déclenchement, en particulier d'un court-circuit, à travers la section de conducteur externe (2), fermer d'abord le premier ensemble de circuit à semi-conducteur (11), par la suite désactiver le deuxième ensemble de circuit à semi-conducteur (14), par la suite ouvrir le commutateur de dérivation (8) et ensuite commander le premier ensemble de circuit à semi-conducteur (11) dans l'état non conducteur.
